Europäisches Patentamt

European Patent Office

Office européen des brevets

(11) Publication number: **0 326 422**
**A2**

# (12) EUROPEAN PATENT APPLICATION

(21) Application number: **89300835.9**

(51) Int. Cl.⁴: **A 01 K 45/00**

(22) Date of filing: **27.01.89**

(30) Priority: **29.01.88 US 149415**

(43) Date of publication of application:
**02.08.89 Bulletin 89/31**

(84) Designated Contracting States:
**DE ES FR GB IT NL**

(71) Applicant: **TAMNAHARRY DEVELOPMENTS LIMITED**
**Blaris Industrial Estate Altona Road**
**Lisburn County Antrim, BT27 5QB Northern Ireland (GB)**

(72) Inventor: **O'Neill, James John**
**Tamnaharry House Warrenpoint**
**County Down BT35 3QX Northern Ireland (GB)**

(74) Representative: **Murgatroyd, Susan Elizabeth et al**
**Baron & Warren 18 South End Kensington**
**London W8 5BU (GB)**

(54) Poultry container and system for destacking unloading and stacking the container.

(57) The invention includes a combination of a stackable poultry container (21) suitable for being loaded with poultry by manual or automated entrapment systems and for being transported in a stacked condition with substantially similar containers, and an apparatus (23,24,33) for destacking a stack of several of the containers (21) when loaded with poultry and restacking the containers (21) when they are empty. The containers (21) are generally rectangular, have open tops, and at least one wall which is hinged to pivot upwardly and inwardly during the loading of chickens into the container (21). The apparatus (23,24,33) for destacking and restacking the containers (21) includes a conveyor (23) for carrying stacked or unstacked containers (21) along a predetermined path of travel, a destacker (24) for successively removing one container (21) at a time from a stack of the containers (21), and a stacker (33) for successively adding one container (21) at a time to a stack of empty containers (21).

Fig. 1

EP 0 326 422 A2

Description

## POULTRY CONTAINER AND SYSTEM FOR DESTACKING, UNLOADING AND STACKING THE CONTAINER

The present invention is a stackable poultry container, and a system for destacking the containers when they are loaded with poultry, and for cleaning and restacking the containers after they have been unloaded.

Poultry ("birds") are typically manually caught and transported in cages and, at some point following the arrival of the cages at a processing plant, the birds must be removed from the cages and transferred to a processing line for further processing. Typically such cages are relatively shallow in height compared to their length and width, as they are designed to be about the height of a mature bird, but long enough and wide enough to hold a number of birds in a single layer. At a processing plant the birds are removed from the cages and placed on a processing line, again typically by hand labor. As the poultry industry has grown, however, the ability of hand labor to keep up with all the various steps in the catching, transporting and offloading processes has struggled to keep apace, and various mechanized, automated systems for catching, transporting and offloading poultry have been proposed and developed.

Additionally, the growth in numbers of birds that must be harvested and transported has led to the development of multiple coops, cages or containers for loading and transporting chickens. As larger numbers of birds have been carried in larger sets of containers, the time pressure of offloading the larger containers at processing plants has similarly increased. Accordingly, there exists a need for improved methods in the offloading of larger numbers of birds from such large or multiple containers.

A number of different solutions have been proposed for offloading large numbers of birds from multiple containers with mixed results. For example, in U.S. Patent No. 3,741,417, there is discussed an offloading system in which a stack of bird containers is placed on a table which can be tilted upwardly. The side doors of the containers swing open and the birds fall out of the containers against a downwardly inclined barrier and slip down to a conveyor which carries them along for further processing. Other patents teach various catching, caging and transporting systems, and some even discuss transport systems for poultry once they have been removed from containers, but there is a lack of any appropriate system for unloading multiple containers of poultry in a rapid, economical and productive manner.

One of the underlying considerations in developing such systems is that modern poultry are bred and raised to develop various different characteristics, most of which are intended to enhance their position and appeal in the marketplace, rather than their resistance to physical handling during processing. Expressed differently, poultry bruise easily if mishandled, and such bruises are readily evident when the poultry are packaged for retail resale and, consequently, such bruised poultry or portions thereof must be discarded and made use of in a less valuable manner, such as rendered products. Thus, although a system like that described in U.S. Patent No. 3,741,417 may be efficient in terms of the physical movement of birds from place to place and specifically from containers to a conveyor line, such systems can be economically undesirable if they overly damage the birds and reduce the retail value of the processed chicken products.

Accordingly, there exists a need for transporting and offloading poultry in such a manner that large numbers of birds can be offloaded in a minimum amount of time and with a minimum amount of actual or potential damage to the birds.

Furthermore, such a system should be compatible with the increasing use of automated poultry entrapment and harvesting devices. One such device is described in United States Patent No. 4,766,850, for "Method and Apparatus For Collecting and Conveying Objects From a Surface", which is assigned to the assignee of the present invention. This application describes an apparatus which can collect large numbers of poultry and place them in stacked containers in rapid, repeatable fashion. Obviously, the increase in productivity which is offered by such an automated chicken harvesting device would be quickly lost if the containers into which the poultry were initially loaded when collected were unsuitable for offloading and processing purposes. Accordingly, there is a need for an offloading system which is complementary to automated harvesting, rather than a system which may add one or more additional transfer steps.

Additionally, for harvesting purposes poultry cages or containers typically have side opening doors. These are most convenient for use when placing birds into the relatively shallow containers, but are generally awkward when birds are to be removed. Birds are most easily removed, and damaged the least, from open topped containers. Birds cannot be securely held or transported in an open-topped container, however, so some additional structure is generally required. Furthermore, where manual loading of birds is desired or necessary, an open-top container permits such hand loading with minimum damage to the birds and a good distribution of birds in each basket.

For example, in one such system the birds are placed in open-topped containers which during transport fit like drawers into a supporting structure. Although this offers a potential solution to the problem of transport in open-topped containers, it is accompanied by the disadvantage that the supporting structure has no use other than support of the container and thereby adds extra weight and storage burdens to any given transport and offload system.

Accordingly, it is an object of the present invention to provide an offloading system for poultry which is a combination of one or more stackable and destackable poultry containers which are suitable for being loaded with automated entrapment systems, as well as by manual labor.

It is another object of the invention to provide a combination for offloading poultry which includes an apparatus for destacking stack of loaded poultry containers and for restacking empty containers.

It is a further object of the invention to provide a disassemblable cooping module for poultry which requires no supporting structure other than the containers which form the module.

It is another object of the invention to provide a method of destacking loaded poultry containers and restacking empty containers for further use after they have been emptied.

It is a further object of the invention to provide a module of poultry containers suitable for harvesting, transportation and offloading of poultry by mechanized equipment, rather than by hand.

It has been found by the present invention that the above objects may be accomplished by providing a combination of one or more stackable and destackable poultry containers suitable for being loaded with poultry by automated entrapment systems and for being transported in stacked condition, and an apparatus for destacking a stack of loaded poultry containers and for restacking empty containers.

The combination includes a stackable and destackable container which has a generally rectangular floor and substantially vertical side walls and end walls to form a generally rectangular container with four corners. Projecting members extend vertically upwardly and apertures open downwardly from the bottom of each corner with the apertures conforming in dimensions to the projecting members for interengagement therewith. One of the vertical end walls is hingedly mounted to form a door which pivots upwardly and inwardly during the loading of chickens into the container.

The combination also includes an apparatus for destacking loaded and stacked containers and for restacking the containers when they are empty. This apparatus comprises a conveyor for moving a stack of containers along a predetermined path of travel, an apparatus for successively removing one container at a time from a stack of containers, a conveyor for advancing unstacked containers along a line during which poultry can be removed from the open tops of the containers, and an apparatus for successively adding one empty container at a time to a stack of empty containers.

The foregoing and other objects, advantages and features of the invention, and the manner in which the same are accomplished will become more readily apparent upon consideration of the following detailed description of the invention taken in conjunction with the accompanying drawings which illustrate preferred and exemplary embodiments, and wherein:

Figure 1 is an overall perspective view of the present invention;

Figure 2 is a partially exploded perspective view of the container lid and base portions of the present invention;

Figures 3A-3H are schematic views showing the destacking sequence of operation of the present invention;

Figures 4A-4H are schematic views similar to those of Figures 3A-3H, but showing the sequence of operations for stacking empty containers;

Figure 5 is a partial perspective view of the destacking apparatus of the present invention;

Figure 6 is a perspective view of a portion of the destacking apparatus shown in Figure 5;

Figure 7 is an elevational view taken generally in the direction of the arrow 7 of Figure 5;

Figure 8 is a cross-sectional view taken generally along lines 8-8 of Figure 7;

Figure 9 is a cross-sectional view similar to that of Figure 8, but taken along the stacker rather than the destacker;

Figure 10 is an enlarged partial perspective view of particular portions of the destacker; and

Figure 11 is an enlarged partial perspective view of particular portions of one of the containers of the invention.

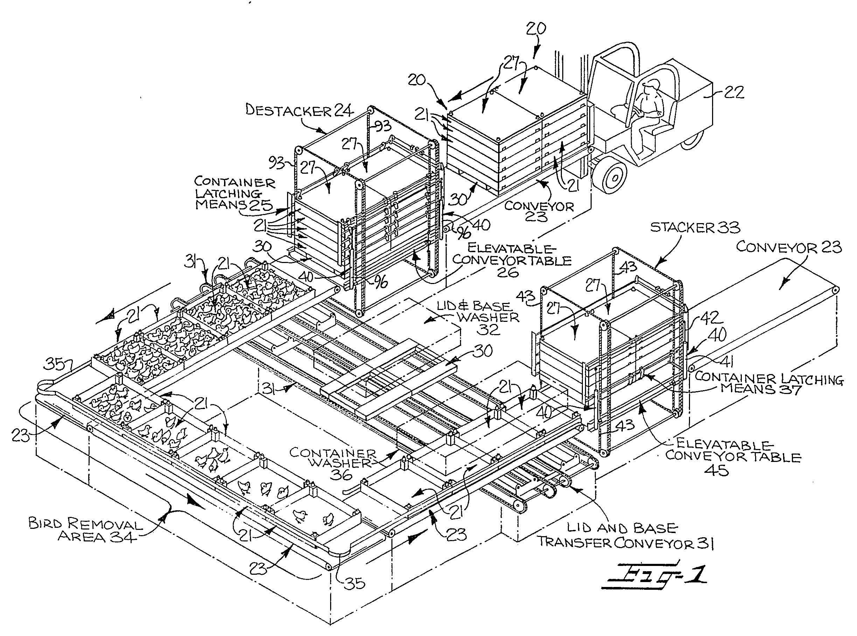

Figure 1 illustrates an overall view of the unstacking, unloading, transfer and restacking features of the present invention, along with the disassemblable chicken carrying modules. These modules are broadly designated at 20 and in Figure 1 are shown as a stack of five of the individual stackable and destackable containers which in turn are broadly designated at 21 and will be described in more detail hereafter. As illustrated in Figure 1, two adjacent container modules 20 are unloaded from a forklift truck 22 which has transferred them from some other location, for example a truck.

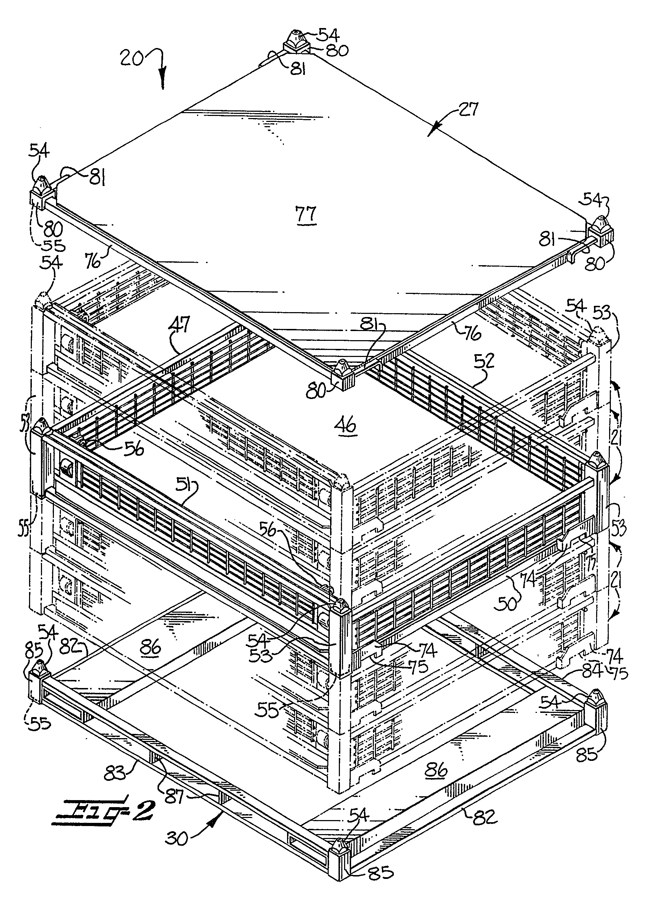

As will be discussed in more detail hereinafter, the container modules 20 travel along a conveyor 23 into the destacker 24. The particular construction and operation of the destacker 24 will by discussed in greater detail with references to Figures 3A-3H, and Figures 5, 6, 7, 8 and 10.

As best seen in Figure 1, however, the embodiment of the destacker 24 shown is capable of concurrently destacking a pair of modules 20 into individual containers 21 using container latching means 25 and an elevatable conveyor table. The destacked containers 21 continue traveling along conveyor 23 while the lid and base portions of the modules 27 and 30, respectively, are transferred to another conveyor broadly designated at 31 which carries them to be washed and then restacked into modules.

As the destacked conveyors 21 travel along conveyor 23, they are eventually directed to the stacker broadly designated at 33. In the illustrated embodiment, the path of the conveyor 23 from the destacker 24 to the stacker 33 forms a generally U-shaped configuration, which offers several advantages in the practice of the invention, but which is not absolutely critical to the operation of the invention, it being understood that other conveyor configurations may be possible, desirable, or even necessary under some circumstances without departing from the spirit or teaching of the invention.

The majority of the path of the conveyor 23 between the destacker 24 and the stacker 33 provides an area in which birds can be lifted out of the open containers and transferred to other conventional poultry carrying devices, a number of examples of which are commercially known and available. All of this portion of the path of the conveyor 23 therefore forms a bird removal area, portions of which are broadly designated at 34 in Figure 1. As illustrated therein, the containers 21 may be additionally guided along the conveyor 23 by a series of guides or railings 35 which run along the sides of the conveyor 23.

When the containers 21 have been emptied of birds, it is generally desirable that they be thoroughly cleaned before being reused, as they will typically be littered with chicken droppings and the like. For this reason, a container wash broadly designated at 36 may optionally be included along the conveyor 23 following the bird removal area snd prior to the stacker 33.

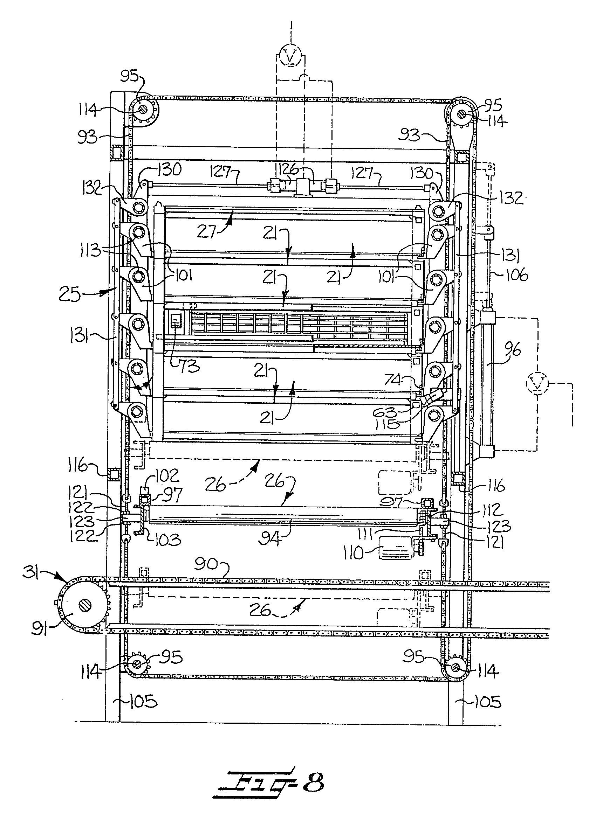

The containers 21, the lids 27, and the bases 30 are all brought together at the stacker 33 and reassembled into modules, a portion of one of which is illustrated at the stacker 33 in Figure 1. The operation of the stacker 33 will be discussed in more detail with reference to Figures 4A-4H and Figure 9. The stacker 33 includes container latching means 37 which are substantially the same in structure and operation to the container latching means 25 of the destacker 24, but which are present in only one set. Figure 1 also shows an overall view of the raising and lowering means 40 for a conveyor table 45 of the stacker which basically comprises a hydraulic cylinder 41 and piston 42 which drive a series of chains 43, which in conjunction with sprockets 44 raise and lower conveyor table 45 which is either similar or identical to, depending upon the chose embodiment, the elevatable conveyor table 26 of the destacker.

When a desired set of containers 21 have been stacked into modules 20, they exit the system along the last portions of conveyor 23.

Figure 2 is partially exploded perspective view of one container 21, a module lid 26, and a module base 30. Other portions of Figure 2, which for clarity have only been partially included as the phantom line drawings, demonstrate how several such containers 21 may be formed into a module. The container 21 comprises a generally rectangular floor 46, a pair of substantially vertical side walls, generally designated at 47 and 50, and a pair of substantially vertical end walls generally designated at 51 and 52. All of the walls extend perpendicularly upwardly from the floor 46 with the end walls 51 and 52 connected to the side walls 47 and 50 to form a generally rectangular container with four corners.

In one embodiment, the container 21 of the present invention can be formed of aluminum, stainless steel or other appropriate metallic material, or in other embodiments can be formed of appropriate synthetic materials such as high impact polymeric materials, laminated composites or any other material which otherwise meets the structural and chemical demands associated with the handling of live poultry.

In the illustrated embodiment, the container 21 is formed of a framework of generally rectangular metal pieces with square cross-sections, several pieces of metal with channel-type cross-sections, and some wire portions which form the side and end walls and which provide ample ventilation for birds in the container 21.

The four corners are defined by posts, three of which are visible in the view of Figure 2 and are designated at 53. A projecting member 54 extends vertically upwardly from the top of each corner in the shape of a truncated pyramid. Each corner post 53 likewise contains an aperture 55 which conforms in shape and dimension to the truncated pyramid projecting members 54. As indicated by the phantom line drawings of Figure 2, because the projecting members 54 conform in dimension to the apertures 55 and are positioned at the corner post 53 of the container 21, any number of such containers can be stacked one upon another in matingly receivable engagement to form a portion of a resulting module 20.

It will be understood that although the illustrated embodiment has projecting members facing upwardly and apertures facing downwardly, the container 21 could likewise be formed with the projecting members facing downwardly and the apertures facing upwardly with equivalent results and without departing from the scope of the invention or the claims. It will be further understood that although the terms "upwardly" and "downwardly" are used throughout the remainder of the application, they are used in an equivalent sense to refer to any upward and downward engagement between the containers of the present invention or their equivalents.

Figure 2 shows some additional details of the container 21, one of which is the vertical end wall 51 being hingedly mounted on hinges 56 to pivot upwardly and inwardly as a door during the loading of chickens therein.

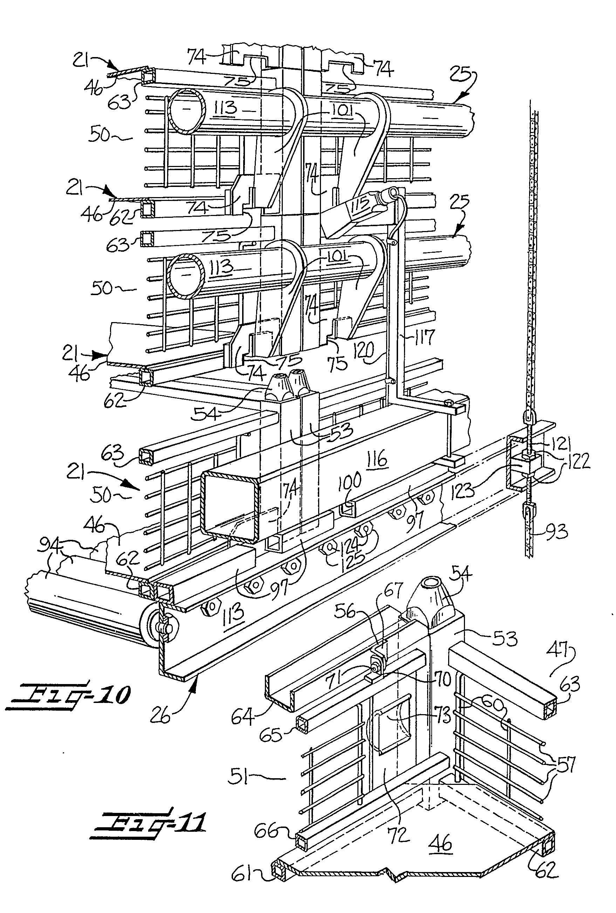

Some of the features of the hinge and the door are more clearly illustrated in Figure 11 which is a partially broken away perspective view of a corner of the container 21. Figure 11 shows the corner post 53, the projecting member 54, a portion of the floor 46, the interconnected horizontal and vertical wires 57 and 60, respectively, which form the side and end walls, framework members 61 and 62 beneath the floor 46, framework member 63 along the upper portion of the side wall 47, a channel-shaped framework member 64 along the upper portion of end wall 51 and upon which hinge 56 is partially mounted, and framework members 65 and 66 which form the inwardly and upwardly pivoting door portion of end wall 51.

As best illustrated in the detailed view of Figure 11, the hinge 56 comprises two pieces of angled metal 67 and 70 and a bolt 71 which passes between respective openings in the angled metal portions 67 and 70. The position of the hinge 56 combined with the extension of the framework member 66 which rests against the post 53 provides a door within side wall 51 which can swing upwardly and inwardly but which is blocked from swinging outwardly by the engagement of framework member 66 with post 53. The inwardly and upwardly swinging door of the present invention is particularly useful in combination with certain mechanized chicken harvesters such as are the subject of applicant's aforementioned U.S. Patent No. 4,766,850 for "Method and Apparatus for Collecting and Conveying Objects From a Surface". The end wall 51 also includes a solid portion 72 into which is formed a curved bumper portion 73. When the bumper portion 73 is engaged by some external apparatus, such as the loading conveyors or other portions of a mechanized poultry harvester, the door will swing inwardly and upwardly with the bumpers 73 protecting the wire portions or framework of end wall 51 from damage.

Returning to the feature illustrated in Figure 2, it will be seen that the container 21 of the present invention further includes panel portions 74 along the side wall 50, a corresponding pair of which are also present on side wall 47, but are not visible in the particular view of Figure 2. These panel portions each include a generally rectangularly shaped opening 75 which receives portions of the cage latching means 25 and 37 which have been noted in Figure 1 and which will be described in more detail hereinafter.

Although the containers of the present invention are particularly useful with respect to automated or mechanical loading systems, the containers offer advantages for manual loading as well. First, if used individually, the open-top containers of the invention facilitate hand loading with minimum damage to the birds and good distribution of birds within the container.

Second, when two or more containers are stacked, an upper container can be partially tilted or pivoted apart from a lower container along one of the walls in a manner analogous to the opening of a jaw or in a "clamshell" fashion to permit birds to be hand loaded into the lower of the two containers. The upper container can be maintained in its tilted position using a solid prop or jack, or any other suitable conventional item. In this manner, the containers can still be stacked, destacked, unloaded and restacked using the system of the present invention even when the containers are conventionally hand loaded.

Figure 2 also illustrates the lid portion 27 and the base portion 30, which along with one or more stacked containers 21 forms the disassemblable module 20. Lid 27 is formed of a generally rectangular framework of members 76 which are generally similar to the other framework members described herein with the possible exception of differences in dimension and cross-section for various structural purposes. A planar solid cover 77 is supported by the framework members 76 and forms the solid barrier portion of the lid of a module. The framework members are connected to one another at the corner posts 80 which include projecting members 54 identical to those described with respect to container 21, and apertures 55 which are likewise identical to the apertures 55 described with respect to the container 21. In this manner, the lid 27 will matingly engage with a container 21 and form the lid of the module 20, and because the lid 27 includes the projecting members 54, a container 21 can be matingly engaged upon the lid 27 as well as beneath it. Furthermore, as will be described below with respect to the base, modules 20 can be stacked upon one another, as the base of each module is matingly engaged with the lid of a module below it or above it, respectively.

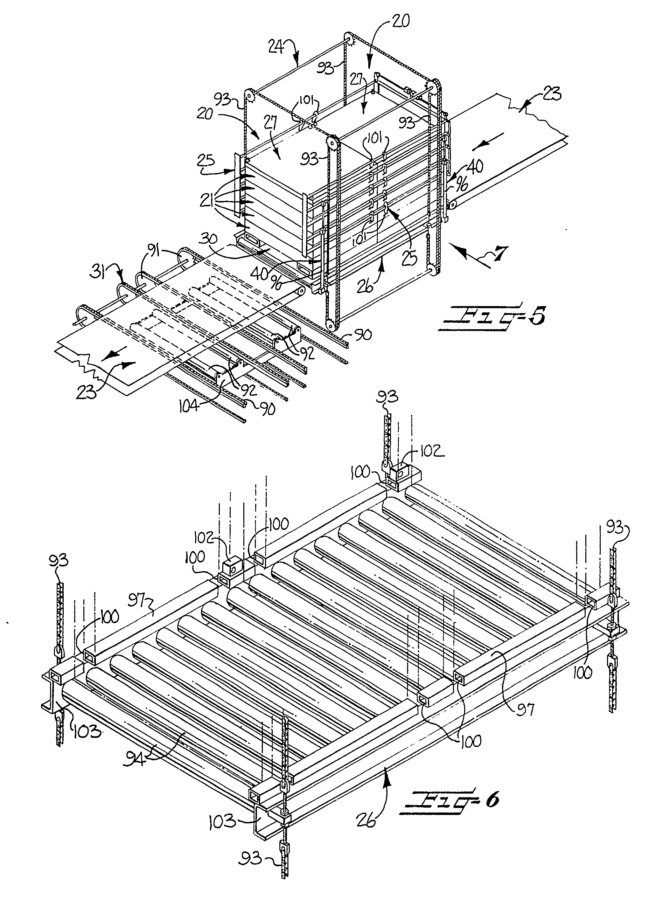

The lid 27 further includes L-shaped members 81 which form openings adjacent opposite framework members 76 for receiving the cage latching means 25 and 37 in the same manner in which they are received by the openings 75 in the container 21 and as will be more fully described with respect ot Figures 7, 8, 9 and 10.

The lower portions of Figure 2 illustrate the features of the base portion 30 of the module 20. Base 30 also comprises a generally rectangular framework which is defined by framework members 82 along the portions corresponding to end walls 50 and 47 of the container, and spaced parallel framework members 83 and 84 which form the other respective sides of the generally rectangular base 30. Framework members 82, 83 and 84 meet at respective corner posts 85 which in turn include projecting members 54 and apertures 55 identical to those of the container 21 and the lid 27. Figure 2 demonstrates that with these respective identical projecting members 54 and apertures 55 present on the base 30, the container 21, and the lid 27, these elements can be assembled in any order or fashion whatsoever to form disassemblable modules customized for particular uses.

Figure 3 also illustrates that the base 30 includes box girders 86 which form entries for external lifting means such as the forks of a forklift truck so that the entire module can be transported in convenient fashion (Figure 1). In order to help support the framework of the base 30 in conjunction with the box girders 86, the framework members 83 and 84 are also supported by smaller, upright framework members 87.

Figures 3A-3H schematically demonstrate the operation of the destacker 24. In each of the sequenced views of Figures 3A-3H, there are shown two modules 20, individual containers 21, portions of the conveyor 23, the elevatable conveyor table 26, the lid 27 and base 30 portions of each module, and the base and lid transfer conveyor 31. It will be understood that the particular features and construction of the base and lid transfer conveyor 31 are not critical to the invention, but in the drawings the conveyor 31 includes a plurality of driven belts 90 which travel between respective belt pulleys 91 and carry the bases and lids from a position adjacent the destacker 24 to a position adjacent the stacker 33 all as best illustrated in the perspective view of Figure 1. The progression of Figure 3 also shows individual rollers 92, portions of which are also illustrated in Figure 1. Finally, the container latching means 25 of the destacker 24 are also illustrated in the Figure 3A-3H sequence and further identified by the letter C for schematic purposes. For the sake of clarity, certain of the reference numerals have been omitted from Figures 3B-3H so that the operation of the destacker 24 and the movement of the various components of the modules 20 may be more clearly observed.

Figure 3A shows the initial position of a pair of modules when they initially arrive upon the conveyor table 26. Two such modules are shown adjacent one another in all of the drawings, it being understood that the principles of operation are the same when destacking either single or multiple modules. Similarly, for schematic purposes, the container latching means C are drafted as engaging the modules 20 in a direction parallel to the general direction of the conveyor 23, an orientation different from that shown in the embodiment of Figure 1, in which the container latching means 25 engage the containers 21 from a position perpendicular to the movement of the conveyor 23. It will be understood, however, that for the sake of schematically explaining the operation, the principles are the same.

With the modules 20 in the initial position shown in Figure 3A, they rest upon the conveyor table 26. In the first sequence of operation, table 26 lifts the module a distance which is approximately equivalent to the height of one container. The container latching means C then engage the lowermost container at the openings 75 which have been described previously. At this point, the modules 20 are concurrently supported by the cage latching means and by the conveyor table 26. In the next step in the sequence, which is illustrated in Figure 3C, the table 26 is lowered to a level below that of the conveyor 23 and equivalent with that of the base and lid transfer conveyor 31. The modules 20 remain in place because they are supported by the container latching means C, but the base portions--which are supported only by the table 26--descend with the table 26. The respective base portions 30 are transferred from the table 26 to the conveyor 31 for further transfer to the top and base wash 32 (Figure 1) and the stacker 33.

In the next step, Figure 3D, the table 26 is elevated to return and engage the lowermost containers 21 in the modules 20. The container latching means C are released so that the remaining stack of containers is temporarily supported solely by the table 26. This is followed by the steps shown in Figure 3E in which the table 26 is lowered a distance substantially equal to the height of one container at which point the container latching means C reengages the remaining stack at the second from lowest container. At this point, all of the containers in the stack are supported by the table 26 and all of the containers except the container resting directly on table 26 are additionally supported by the container latching means C.

In the next step, Figure 3F, the table 26 is lowered to a level substantially coplanar with conveyor 23, which movement of table 26 concurrently lowers the bottommost containers 21 to the level of conveyor 23 while the remaining containers in each module 20 remain supported by the container latching means C. The conveyors then transfer the bottommost containers 21 downline so that the birds therein may be unloaded.

The sequence of Figures 3D, 3E and 3F is repeated until all of the containers are successively lowered and transferred and, as illustrated in Figure 3G, only the lid portions 27 of the respective modules remain engaged and supported by the container latching means C. When all of the containers 21 have been transferred to the downstream portions of conveyor 23, the conveyor table 26 is again elevated until the lids 27 alone rest upon it (now shown), the container latching means C release the lids, and the table 26 is again lowered to a level coplaner with base and lid transfer conveyor 31 for successive wash and transfer to the stacker 33 in the same manner the bases 30 were so transferred. The conveyor 26 is then raised to a level coplanar with loading conveyor 23 after which the entire sequence of Figures 3A-3H may be repeated.

Figures 4A-4H schematically illustrate the manner in which modules are assembled by the stacker 33. Figure 4A shows downstream portions of conveyor 23, several containers 21, the container latching means 37 illustrated schematically at C, the conveyor table 45 of the stacker 33, the driven chains 90 and chain sprockets 91, and another set of rollers 92 which, when driven in the directions indicated by the arrows in Figure 4A, transfer items from the base and lid transfer conveyor 31 to the conveyor table 45 of the stacker.

The manner of restacking the bases, lids and containers to form modules proceeds in a fashion generally complementary to the manner in which the modules were disassembled in the destacker and, as in the case of Figures 3A-3H, the elements in the drawings and the described steps will only be included as necessary to understand the operation clearly and will not be redescribed or relabelled in each of the Figures.

In Figure 4A, the initial step in the assembly of a module is illustrated showing containers 21 on conveyor 23 adjacent the container latching means C, as well as a pair of lids 27 being transferred from the conveyor 31 to the conveyor table 45.

Figure 4B illustrates that once the lids 27 have been completely transferred onto the table 45, the table is elevated to a level approximately one container height above conveyor 23 at which point the container latching means C engage the lids 27 along the openings formed by the L-shaped members 81 which were described with respect to Figure 2. As is the case with the description of Figures 3A-3H, the container latching means C are shown as entering in a direction parallel to the movement of conveyor 23, whereas it will be understood that in the embodiments illustrated in Figure 1 and the remainder of the drawings, the container latching means 37 engages containers and lids in the stacker from the direction perpendicular to the direction of movement of conveyor 23. In the sequence step illustrated in Figure 4B, the lids 27 are supported by both the container latching means C and the conveyor table 45.

In the step illustrated in Figure 4C, the table 45 has been lowered to a level equivalent with that of conveyor 23, leaving the lids 27 supported solely by the container latching means C. With the table 45 coplanar with the conveyor 23, the containers 21 are moved from conveyor 23 onto conveyor 45 in a position directly underneath the lids 27. Again, it will be understood that two such containers are shown being aligned with two lids, but that as few as one container and lid or alternatively several containers and lids can be matched depending upon the size and arrangement of the particular stacker 33.

Following the step illustrated in Figure 4C, the table 45 is raised so that the containers 21 engage the lids 27. When the containers and lids engage, the container latching means C are released so that the lids and containers are supported solely by the table 45. The table 45 is then raised a height substantially equivalent to the height of one container at which time the container latching means C engage the containers rather than the lids which are now supported by the containers. Figure 4D illustrates three pairs of containers being supported and lifted by the table 45 while the container latching means C are disengaged. Figure 4D shows three containers so engaged by the table 45, and Figure 4E shows a later step in the sequence in which five of the containers, which typically make up a module, have been so elevated and supported by the table 45.

Once the desired number of containers that will make up a module have been assembled and elevated together by the table 45, the container latching means C support the entire stack of containers while the table 45 is lowered to a level coplanar with the base and lid transfer conveyor 31 and receives a pair of bases 30 from the conveyor 31. The table 45 is then raised until the bases 30 engage the stack of containers 21 and lids 27 to form a pair of completed modules 20. The container latching means is then disengaged for the last time, the table 45 is lowered to a position coplanar with the conveyor 23 and the completed modules exit the stacker 33 for reuse in poultry harvesting operations.

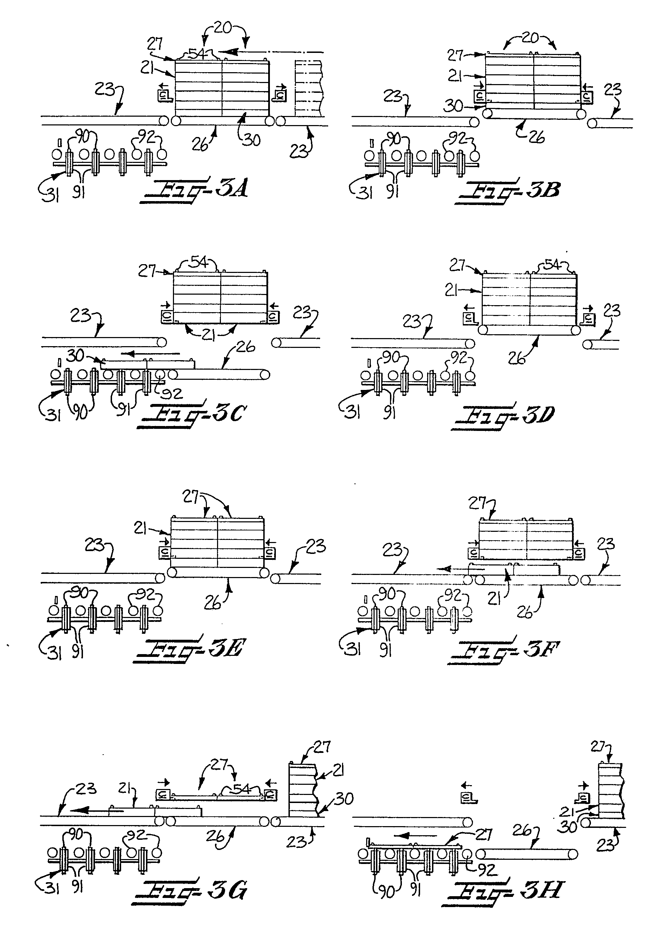

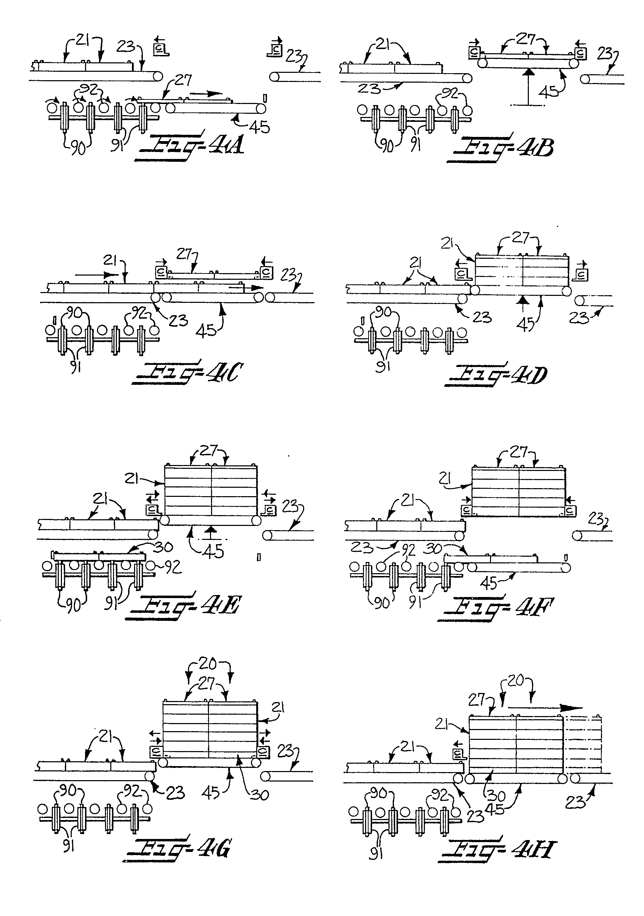

The destacker 24 of the present invention is shown in somewhat greater detail in Figure 5. As illustrated therein, destacker 24 includes an elevatable conveyor table 26 which is shown in detail in Figure 6. The table 26 is supported for vertical movement by means shown as the chains 93, at least one of which supports each of the four corners of the table 26. Table 26 is formed from two channel-shaped members 103 which support a series of rollers 94, enough of which are driven so as to be able to move modules 20 onto table 26 and then successively move bases 30, containers 21, and lids 20 off of the table 26 during the respective sequence of operations described with respect to Figures 3A-3H. The chains 93 are driven around various sprockets 95 by the hydraulic rams 96 which are shown positioned uprightly adjacent two of the chains 93 on adjacent corners of the destacker 24. In order to assist in the guidance of the modules 20 onto the tables 26, the illustrated embodiment includes bordering portions of box girders 97 which include interspersed openings 100 which permit the dogs 101 of the container latching means 25 to pass through and engage the containers 21 in the opening 75, or the lids 27 underneath the L-shaped members 81.

Figure 6 also shows sensing means illustrated as the metal proximity detectors 102. With such detectors in place, and in other locations as will be described herein, the stacking and destacking operations of the present invention can be automated as the detectors read the presence or absence of objects on the table 26, and in particular embodiments, can distinguish between the presence of containers 21 and lids or bases 27 and 30, respectively.

Figure 5 additionally illustrates features which have been previously described including the driven chains 90, and the chain sprockets 91 of the lid and base transfer conveyor 31, as well as the additional rollers 92 onto which lids 27 and bases 30 are initially conveyed from the table 26. Figure 5 illustrates that the rollers 92 are supported in an appropriate framework 104.

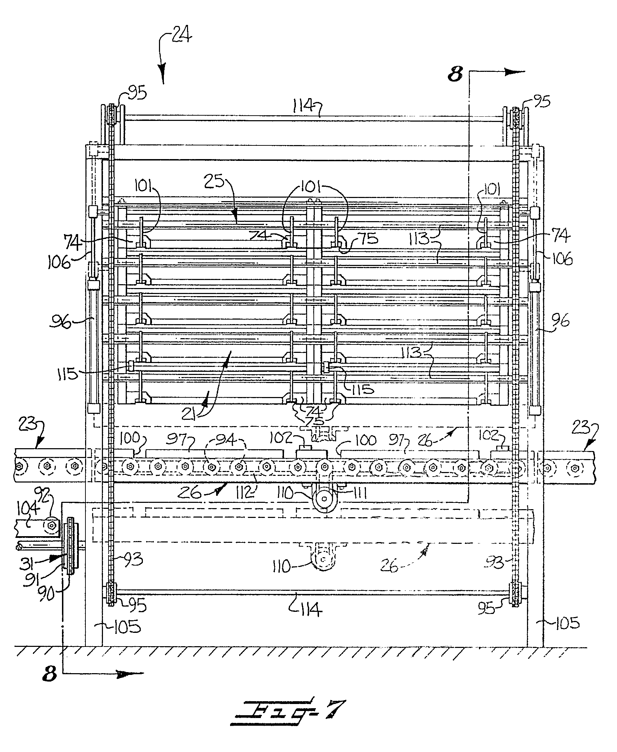

Certain features of the container latching means 25 are also illustrated in Figure 5. These include the dogs 101 and the cylinders 105 upon which the dogs rotate in a manner which will be described more thoroughly with respect to Figure 8. As in the other illustrations, a stack of five containers 21, a lid 27 and a base 30 are illustrate as making up the complete modules 20. The four chains 93 illustrated in Figure 5 are driven by the hydraulic rams 96, and because the table as illustrated is supported by four such chains, the table is maintained in a level position as it is moved between its various positions.

With respect to the container latching means 25, the partial plan view of Figure 7 illustrates that two sets of dogs are used on each respective side of each respective module 20 to engage and support the containers 21. In the embodiment illustrated in Figures 5, 7, 8, and 10, a set of dogs 101 is illustrated for each container in the stack up to a stack of five containers. As illustrated in the schematic views of the sequence of Figures 3A-3H, only the bottommost container need be supported by the dogs and the remaining containers can be supported by the dog-supported lowest container. In a preferred embodiment of the destacker 24, however, the use of an additional set of dogs 101 for each container being supported has been found to be useful because at this position the individual containers are filled with poultry, making the modules quite heavier than they are when empty.

As set forth earlier, Figure 7 is an elevational view taken generally along arrow 7 of Figure 5 and illustrates further details of the destacker 24. The destacker includes a framework generally indicated at 105 typically formed of metal portions. As described with respect to Figures 5 and 6, the conveyor table 26 is suspended within the framework 105 on chains 93 which are in turn operated by the hydraulic cylinders 96. Each of the cylinders 96 has a piston arom 106 which in turn is fastened to the chain 93 by the linkage 107. As piston arm 106 is extended from or alternatively retracted back into hydraulic cylinder 96, it moves chains 93 around their respective sprockets 95 and moves the conveyor table 26 upwardly and downwardly. The three basic positions of the table are illustrated in Figure 7 with the table 26 in solid lines being shown in the position in which it is coplanar with the loading conveyor 23 and then in broken lines is shown in its raised position adjacent the bottommost container 21 in a module 20, and then in its lowermost position coplanar with base and lid transfer conveyor 31. Figure 7 illustrates that the rollers in conveyor table 26 may be driven by a motor 110 which drives belt 111 which in turn drives belt 112 which in turn drives the rollers 94 on the table 26. As explained earlier herein, the driven rollers 94 move the containers on table 26 onto the downstream portions of conveyor 23 and then the table 26 is in its lowermost position, moves the lid and base portions 27 and 30, respectively, onto the base and lid transfer conveyor 31.

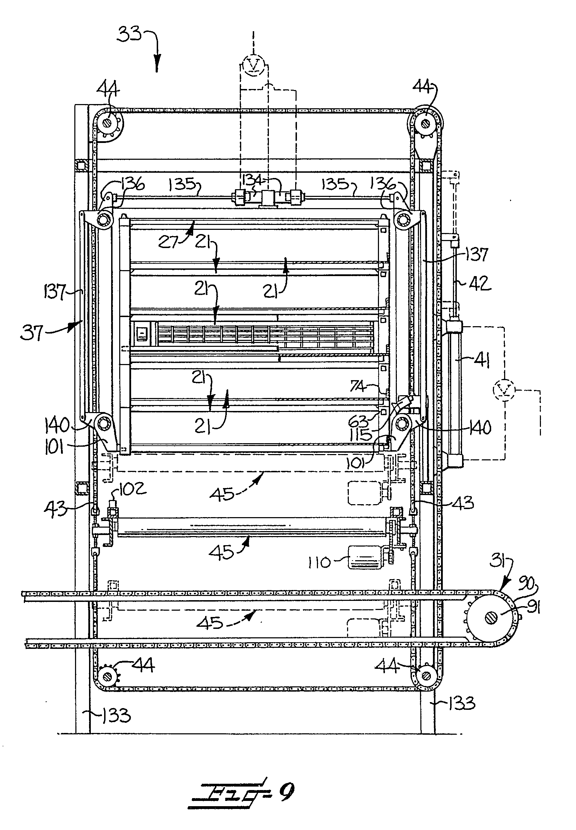

In the view of Figure 7, the destacker 24 is illustrated as carrying two modules 20 of five containers 21 each, and in the particular illustration, the base portions of the modules 20 have been removed, and the conveyor table 26 lowered to the position coplanar with the loading conveyor 23 so that each group of five containers 21 is supported by the container latching means which has heretofore been broadly designated as 25. Figure 7 more clearly illustrates the position of the dogs 101 of which several, but for the sake of clarity not all, have been labelled with reference numerals. The dogs are carried by rotatable members 113 in a relationship which is further illustrated in Figure 10. Figure 10 illustrates how the dogs 101 are positioned on the rotatable members 113 so that when the rotatable members 113 are rotated, the dogs 101 will pivot into or out of engagement with the openings 75 in the panel portions 74 of the end walls 47 and 50 of a container 21.

Figure 7 also shows some additional details including axles 114 between the respective sprockets 95 of the chain 93, the box girders 97 along the parallel side edges of the conveyor table 26 and the openings 100 in the box girders 97 which provide room for the dogs 101 to pivot into the containers 21 when the containers are initially supported by the table 26. Figure 7 also illustrates the metal proximity detectors 102 described earlier with reference to Figure 6, and in addition show two further metal proximity detectors 115, one of which is shown in somewhat greater detail in Figure 10. As seen in Figure 10, the metal detector 115 is positioned just above the lowermost rotatable member 113 which places it in a position to detect the proximity of a cage 21 when that cage is in the lowermost position in the stack. In particular, metal proximity detector 115 is positioned to read the proximity of the upper framework member 63 in the container 21 rather than the lower framework member 62. In this manner. the position of metal proximity detector 115 enables it to discriminate between containers 21 and lids 27 or bases 30 which do not have the same vertical dimensions as the containers. Alternatively, the position of metal proximity detectors 102 on conveyor table 26 is adjacent to the surface of the rollers 94 so that all items on the table 26, whether containers 21, lids 27 or bases 30, are all detected by detectors 102. The output from respective detectors 102 and 115 thus provides a method of discrimination between the items which are being destacked, so that when an item on table 26 is detected by detectors 102, but has not been previously detected by detector 115, the destacker 24 can be programmed to recognize that such an item is either a lid or a base, and that table 26 must be lowered to a position coplanar with base and lid transfer conveyor 31. In the same manner, when detectors 115 and 102 both detect an item, the destacker 24 can be programmed to recognize that a container is being detected, and that the table 26 should accordingly be lowered to a position coplanar with conveyor 23 along which the containers are intended to be moved. Figure 10 also shows a further structural feature of the destacker 24. As illustrated in Figure 10, box girder 116 is a part of the stationary framework 105 of the destacker and supports a bracket 117 which in turn supports the metal proximity detector 115 in its proper stationary position and carries detector wiring 120 as well.

Figure 10 also illustrates an adjustment mechanism for leveling the table 26 shown in the form of the threaded member 121 and the adjustment nuts 122 which permit the threaded member to be adjusted and consequently the entire table 26 leveled. The threaded member 121 passes through a small bracket 123 which in turn is fixed to the channel member 103 which forms border portions of the table 26. Figure 10 also illustrates how the rollers 94 may be carried by the table 26, namely on small axles 124 which can be secured by nuts 125 to the channel member 103.

Some remaining details of the destacker are further illustrated in Figure 8 which shows a stack of five containers 21 in the destacker 24. For the sake of clarity, only one of the containers is illustrated in detail and is shown in a cutaway cross-sectional view which illustrates portions of hinged end wall 51, the opposite end wall 52 and floor 46 of that container. In particular, Figure 8 illustrates the means for operating the container latching means 25, and shown as the hydraulic ram 126. The ram 126 operates oppositely extending arms 127 which are pivotally linked through pivot arm 130 to vertical member 131 and which will raise and lower vertical member 131 as the arms 127 are respectively moved toward the center of the destacker or moved toward the framework. Vertical member 131 is in turn pivotally connected through pivot arms 132 to rotatable members 113. When vertical member 131 is raised or lowered by the operation of the hydraulic ram 126, the rotatable members 113 are in turn pivoted so that the dogs 101 engage or disengage from the containers 21 in a manner which has been described previously herein.

The remaining details of Figure 8 have already been discussed with respect to the other drawings and, for the sake of clarity, many of the other reference numerals have been omitted. Figure 8 does, however, again illustrate the three respective positions of the conveyor table 26 and in particular illustrates the table 26 in solid lines in its uppermost position engaging a stack of containers, and then also illustrates table 26 in broken lines at its two other respective positions coplanar with the loading conveyor 23 and coplanar with the lid and base transfer conveyor 31, repsectively.

Figure 9 is a cross-sectional view of the stacker 33. The operation and sequencing of the stacker 33 has already been described with respect to Figures 4A-4H, and it will be understood that many of the mechanical details are essentially identical to those of the destacker which has been described with respect to Figures 5, 6, 7, 8, 10 and 11. There are some differences, however, which will be described with reference to Figure 9. The framework of stacker 33 is generally indicated at 133. The conveyor table for stacker 33 is generally indicated at 45 and shown in its position coplanar with loading conveyor 23 and correspondingly somewhat above lid and base transfer conveyor 31 and somewhat below the position that it can occupy when supporting a stack of containers 21.

The container latching means 37 of stacker 33 is similar in principle, but mechanically contains fewer parts than the corresponding container latching means 25 of the destacker 24. As set forth earlier, because the containers 21 are empty when they are being manipulated by the stacker 33, the total weight which must be supported by the container latching means 37 is much less than that which must be supported by the container latching means 25 of the destacker when the containers 21 are full of poultry. Figure 9 shows that container latching means 37 are also operated by a hydraulic ram 134 and its arms 135. These are pivotally connected through pivot members 136 to the upright members 137. As the ram 134 moves arms 135 respectively outwardly or inwardly, the vertical member 137 is correspondingly raised and lowered and in turn pivots members 140. Members 140 in turn rotate the rotatable members 113 of the stacker 33 which in turn pivot the dogs 101 into and out of engagement with the containers 21 in a manner which has been explained several times previously. Although not specifically illustrated, the table 45 of stacker 33 is of similar construction and operation of that of conveyor table 26 of the destacker and can include a motor for driving the conveyor rollers on the table 45. Figure 9 illustrates that the stacker likewise includes metal proximity detectors 102 and 115, respectively, which operate in a manner identical with the previously described and which in conjunction with one another can identify whether a container, or alternatively a lid or a base, is proximate the detectors.

Figure 9 also illustrates that the table 45 can be raised and lowered through the operation of a hydraulic cylinder 41 and piston 42 which are positioned vertically adjacent the framework 133 as also shown in Figure 1. As already described with respect to Figure 1, the hydraulic cylinder 41 drives chains 43 around respective sprockets 44 to raise and lower table 45 to its respective positions.

Finally, Figures 8 and 9 illustrate that the various hydraulic cylinders and pistons may be controlled by appropriate conventional electrical controls V shown in broken lines in both Figure 8 and Figure 9.

In the drawings and specifications, there have been disclosed typical preferred embodiments of the invention and, although specific terms are employed, they are used in a generic and descriptive sense only and not for purposes of limitation, the scope of the invention being set forth in the following claims.

## Claims

1. A combination of:
a disassemblable poultry carrying module suitable for being loaded with poultry by manual or automated entrapment systems, said module comprising,
at least one stackable, open-top poultry container, said container comprising,
a generally rectangular floor,
a pair of substantially vertical side walls extending from said floor,
a pair of substantially vertical end walls extending from said floor and connected to said side walls to form a generally rectangular container having four corners,
a projecting member extending vertically upwardly from the top of each corner of said container,
an aperture at the bottom of each corner of said container adjacent said floor, said apertures conforming in dimension to said projecting members so that individual containers can be matingly stacked upon one another to form assembled modules independent of external support
one of said vertical end walls being hingedly mounted to pivot upwardly and inwardly during the loading of chickens into said container while said container is stacked immediately beneath another of said containers,
a base portion upon which one or more of said containers may be stacked, and
a lid portion for being received upon the uppermost container in a stack of said containers; and
an apparatus for disassembling said modules into individual containers for unloading and for restacking empty containers, said apparatus comprising,
a first conveyor for moving one or more of said modules along a predetermined path of travel,
a destacker for removing the lid and base portions of said modules and for successively removing the lowermost container in a stack of said containers, said destacker comprising an elevatable conveyor table and means for supporting one or more stacked containers independently of said conveyor table,
a second conveyor for advancing loaded unstacked containers along said predetermined path of travel so that poultry may be removed from the open tops of said containers while said containers are unstacked,
a stacker for successively adding one container at a time to a stack of said empty containers and for adding said lid portions and said base portions to stacks of containers to form said modules, said stacker comprising an elevatable conveyor table and means for supporting one or more stacked containers independently of said conveyor table, and
a third conveyor for advancing reassembled modules out of said stacker in condition ready to be reloaded.

2. A combination according to Claim 1, wherein said container comprises a generally square container.

3. A combination according to Claim 1 or 2 wherein said end walls and said side walls of said container are formed of respective interconnected horizontally and vertically extending metal wires to provide said side walls and said end walls with a plurality of openings for ventilating said container and poultry carried therein.

4. A combination according to Claim 3, wherein said container further comprises a corner post at each said corner of said container and wherein said projecting members extend upwardly from each of said posts and said apertures are formed in the bottom of each of said posts.

5. A combination according to Claim 1,2,3 or 4 wherein said hingedly mounted end wall comprises a pair of horizontally extending framework members with respective interconnected horizontal and vertical wires therebetween, and a generally solid bumper portion on said end wall adjacent said corner for being bumped inwardly and upwardly to thereby open said hingedly mounted end wall for loading of poultry therein.

6. A combination according to any preceding claim, wherein said base portion further comprises:

a generally rectangular framework having substantially the same dimensions as said rectangular container and forming four corners;

an upwardly extending projecting member extending upwardly from each corner of said base portion, said projecting members having substantially the same size and shape as said projecting members on said container;

an aperture at the bottom of each corner of said base portion, said apertures conforming in dimension to said projecting members on said base and on said containers; and

means carried by said framework for receiving lifting means such as the forks of a forklift truck so that the base and any containers positioned upon it may be lifted and transported using said base portion as a support.

7. A combination according to Claim 6, wherein said base portion further comprises a corner post at each corner of said base, said corner post carrying said upwardly extending projecting members and having said apertures in lower portions thereof.

8. A combination according to any preceding claim, wherein said first, second and third conveyors each respectively comprise a roller conveyor formed of a plurality of rollers positioned perpendicularly to the predetermined path of travel, at least some of said rollers being driven rollers for advancing containers along said conveyor.

9. A combination according to any preceding claim, further comprising a lid and base transfer conveyor which travels between said destacker and said stacker for transferring said lid portions and said base portions of said modules from said destacker to said stacker.

10. A combination according to any preceding claim, further comprising washing means positioned on said lid and base transfer conveyor intermediate of said destacker and said stacker for cleaning the top and base portions of said modules prior to adding them to restacked containers.

11. A combination according to any preceding claim, further comprising container washing means along said path of travel intermediate of said destacker and said stacker for cleaning said containers prior to said containers being reassembled into stacked modules.

12. A combination according to any preceding claim, wherein said means for supporting one or more stacked containers independently of said conveyor table in said destacker comprises container latching means which are pivotally movable into and out of engagement with at least one of said containers so that when the container latching means engages said container, said container will be supported independently of said conveyor table, and containers stacked upon said container will likewise be supported independently of said conveyor table by said container latching means.

13. A combination according to Claim 12, wherein said containers further comprise means in said side walls for engagingly receiving said container latching means.

14. A combination according to Claim 12 or 13, wherein said container latching means comprises a pivoting member, at least one container-engaging dog mounted on said pivoting member for pivoting engagement and disengagement with said container, and means for pivoting said pivoting member.

15. A combination according to Claim 14, wherein said container includes rectangularly shaped openings along bottom portions of said end walls for engagingly receiving said pivoting dogs of said container latching means and for supporting one or more of said containers by the interengagement of said dogs and said rectangular openings in said container independently of said conveyor table.

16. A combination according to any preceding claim, further comprising container sensing means on said destacker adjacent said conveyor table for detecting the presence of a container on said table.

17. A combination according to any preceding claim, further comprising container sensing means on said destacker adjacent said container latching means for detecting the presence of a container adjacent said container latching means.

18. A combination according to any preceding claim, further comprising container sensing means on said stacker adjacent said conveyor

10

table for detecting the presence of a container on said table.

19. A combination according to any preceding claim, further comprising container sensing means on said stacker adjacent said container latching means for detecting the presence of a container adjacent said container latching means.

20. A method of disassembling modules which are formed from a stacked plurality of individual stackable open-top containers having poultry therein so that poultry may be unloaded from the open tops of the containers, the method comprising;

(a) conveying the module of loaded containers to an elevator at an initial position;

(b) raising the elevator and the module of loaded containers to an elevated position above the initial position;

(c) supporting the lowermost container in the module on the elevator while supporting the remainder of the containers independently of the elevator;

(b) lowering the elevator and the lowermost loaded container to the initial position while continuing to support the remainder of the loaded containers at the elevated position;

(e) conveying the lowered loaded container away from the elevator;

(f) raising the elevator until it supports the lowermost loaded container remaining in the module while the remainder of the loaded containers are supported independently of the elevator;

(g) lowering the elevator and supported loaded container to the initial position;

(h) transferring the loaded container away from the elevator;

(i) removing the poultry from the open tops of the containers; and

(j) repeating steps (b) through (i) until all of the containers have been conveyed away from the elevator and unloaded.

21. A method of stacking open-topped poultry containers, the method comprising:

(a) conveying a first stackable container to an elevator at an initial position;

(b) raising the elevator and first stackable container to an elevated position above the initial position;

(c) supporting the first stackable container at the elevated position independent of the raised elevator;

(d) lowering the elevator to its initial position;

(e) conveying a second stackable container to the elevator at the initial position;

(f) raising the elevator and second stackable container to an elevated position above the initial position and beneath the first stackable container to form a stacked container module from the first and second containers;

(g) supporting the stacked first and second containers at the elevated position independent of the raised elevator;

(h) repeating steps (e), (f), and (g) for each container to be added to the stack until the stack is complete; and

(i) lowering the elevator and the completed stack of containers to the initial position.

22. A method according to Claim 21, further comprising adding a removable lid to the uppermost container in a stack of containers; and

adding a removable base portion beneath the lowermost container in the stack of containers.

DESTACKER 24

CONTAINER LATCHING MEANS 25

ELEVATABLE CONVEYOR TABLE 26

CONVEYOR 23

CONTAINER LATCHING MEANS

STACKER 33

CONVEYOR 23

CONTAINER LATCHING MEANS 37

ELEVATABLE CONVEYOR TABLE 45

LID AND BASE WASHER 32

CONTAINER WASHER 36

LID AND BASE TRANSFER CONVEYOR 31

BIRD REMOVAL AREA 34

*Fig-1*

Fig-2

*FIG-3A*

*FIG-3B*

*FIG-3C*

*FIG-3D*

*FIG-3E*

*FIG-3F*

*FIG-3G*

*FIG-3H*

Fig-4A

Fig-4B

Fig-4C

Fig-4D

Fig-4E

Fig-4F

Fig-4G

Fig-4H

Fig-5

Fig-6

Fig-7

Fig-8

*F̄Ị̄Ḡ-9*

_Fig-10_

_Fig-11_